Europäisches Patentamt

European Patent Office

Office européen des brevets

(11) Publication number: **0 432 326 A1**

# EUROPEAN PATENT APPLICATION

(21) Application number: 89312909.8

(22) Date of filing: 11.12.89

(51) Int. Cl.5 **C04B 41/50**, C04B 35/44, C23C 24/00

(43) Date of publication of application:
19.06.91 Bulletin 91/25

(84) Designated Contracting States:
AT BE CH DE ES FR GB GR IT LI LU NL SE

(71) Applicant: Shioya, Kiyohiko
4-20-12 Ogikubo Suginami-ku
Tokyo(JP)

Applicant: Sano, Susumu
299, Aza Yamashita Gumyogi-machi
Minami-ku
Yokohama-shi Kanagawa-ken(JP)

Applicant: Kearney, Gus
Gortnafleur
Clonmel Co. Tipperary(IE)

(72) Inventor: Shioya, Kiyohiko
4-20-12 Ogikubo Suginami-ku
Tokyo(JP)
Inventor: Sano, Susumu
299, Aza Yamashita Gumyoji-machi
Minami-ku
Yokohama-shi Kanagawa-ken(JP)

(74) Representative: Pacitti, Pierpaolo A.M.E. et al
Murgitroyd and Company Mitchell House 333
Bath Street
Glasgow G2 4ER Scotland(GB)

(54) Method of producing polycrystal system compound ceramics.

(57) A method of producing polycrystal compound ceramics coating, comprising the steps of: mixing polycrystal compound powder mixture consisting of aluminum oxide spinel 15%-25%, aluminum titanic acid 3%-11%, aluminum cobalt solid solution 17%-24%, aluminum nickel solid solution 3%-8%, silicon 18%-25%, cobalt oxide 4%-10%, ferrosilicon 15%-24%, tantalum carbide 0.2%-2%, manganese oxide 0.05%-2%, silicade molybden 0.3%-6.6% and spinel solid solution 3%-7%, with lithium silicate solution or with silicate line compound solution; mixing the things obtained in the way above with hydroxy compound as a suspension stabilizer or with dispersive silicic acid to obtain suspension; applying the suspension to the surface of metals such as steel plate, stainless steel plate, aluminum plate, copper plate, iron group, platinum group, foundry alloy, refractories. mortar. concrete, fiberboard, and a kind of felt; and hardening and combining them in room temperature and low temperature.

The composition can also be used as a moulding by mixing the powder with a binder and calcining. compressing and sintering said mixture.

EP 0 432 326 A1

# METHOD OF PRODUCING POLYCRYSTAL SYSTEM COMPOUND CERAMICS

## FIELD OF THE INVENTION

The point of the invention in the first item is concerned about the method to produce polycrystal compound ceramic coating which has the characteristics such as brittleness prevention of material hardness, corrosion, wear, nearvitreous resistance and heat resistance to high temperature. These are characteristics to increase the durability of the materials such as steel plates, light metals, titanium plates, alloys, refractories, fiber-boards, concrete, building materials such as concrete blocks, transportation apparatus, manufacturing equipment and storage equipment in the temperature from $50°C$ to $2150°C$. Also, it is possible to coat complex curved surfaces and three-dimensional varied materials with polycrystal compound ceramic.

## DESCRIPTION OF THE PRIOR ART

Main bonding methods of single crystal ceramic currently in use are such as CVD Method of solid-vapor phase system, PVD Method of vacuum evaporation and Metallizing Method which needs alloy as reinforcing material. These methods provide high temperature above $1000°C$ for the bonding part by using a reaction synthesis device. However, the bonding strength or adhesion of the ceramic and the materials which is obtained by the methods above is not perfect.

As shown in Tables 1 through 3, this is because oxidation property, phase transformation phenomenon and lenear expansion coefficient of a metal differs by each metal, and because the bonding strength of ceramic and materials is declined by foreign substances, oils and organic solution not visible to the naked eye to separate each other and to blister.

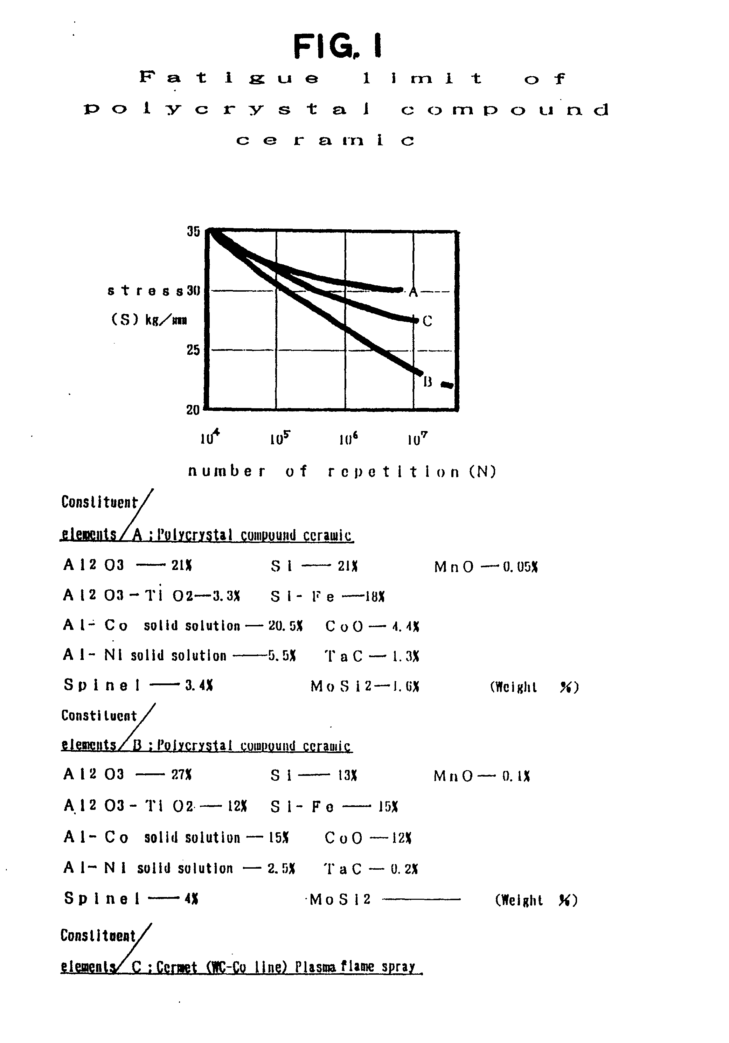

These methods are also not desirable in the point that plate materials are damaged by oxidation when the are fused in high temperature and high pressure, because oxidation and decomposition are easily generated in plasma flame. This is shown in Fig. 1.

Polycrystal compound structure of this invention, however, is to make strong bonds between ceramic and metals and refractory structures only in room temperature and by low temperature treatments, not by fusion by high temperature and high pressure.

As for its components, polycrystal particles form a matrix combination phase. Above all, pure solid solutions strengthen the matrix and form an aggregation form of homogeneous, fine structure.

As for the joining classification, a method of solid-liquid phase system is adopted, which does not need such high temperature in the first stage of bonding. In room temperature, suspension evaporates, sets, and a plastic flow occurs. Then it hardens, forming homogeneous nucleous on the plate material. In low temperature, it forms an oxidizing eutectic which has a low melting point, as a result enough bonding strength can be obtained. This is because the molecules of the oxide $(FeO-Al_2O_3)$ permeate vacancies of the plate material and then combines it as linear crystal. Combination is strengthened further because there exists transition lattice between a seond phase consisting of different kinds of materials and crystal lattices. In this temperature range however, solid solution exists in the matrix in a state of aggregation.

At an oxidation stage between $350°C$ and $600°C$, crystal water and saturated vapor are completely removed. In this temperature range in which moisture content reaches a limit, the texture becomes airtight, then silicon forms nucleouses on the surface of cobalt system solid solution and the nucleouses grow. That is to say crystals are closely packed to a considerable extent and firm crystal nucleouses are formed.

At the stage of second calcination between $600°C$ and $1000°C$, reaction diffusion begins. This promotes the sintering of matrix combination phase and strengthens the bonding of dispersive reinforcement particle. As a result, mechanical strength of ceramic is intensified. Also in this temperature range, the fused component being fine particles, in solid solution separates from matrix, then precipitates in boundaries of crystal. the precipitated particles prevent boundary faces from slipping. Examination of sample fragments shows that fine particles refracted complicatedly exist in the boundaries of matrix crystallite. This phenomenon can be analyzed with a phase equilibrium diagram. Moreover spinel solid solution forms nucleouses on the suface of substitutional solid solution and then grows. In consequence, phase boundary reaction is promoted and the bond of solid phase is strengthened. This becomes a carrier for subsequent diffusion phenomenon. strengthening of solid solution is to increase toughness and weaken thermal stress and impulsive force produced in a state of transition. In this temperature, range polycrystal compound ceramics complete a strong bond and display a stable property in continuous combination under the circumstance of ultra-high temperature (Table 4). Especially it can resolve major problems of ceramics currently in use. That is to say, with its superior thermal property and corrosion resistance, it promotes durability against decline of ceramic's strength caused by thermal shock, creep rupture, rupture of organization and against fluid corrosion etc. in continuous combustion as a temperature of 1350°C. This is shown in Tables 5 and 6.

At a stage of fill fire above 1300°C when solidus shows a state of equilibrium, some quantity of the organization being homogenous does not fuse and compounds which have a low melting point begins to fuse. The fused part promotes diffusion of solid phase, then dense sinter can be obtained.

## SUMMARY OF THE INVENTION

The method to produce polycrystal compound ceramics coating with heat-resistance to ultra-high temperature, oxidation, corrosion and wear resistance. A rough outline of this method is as follows.

| aluminum oxide spinel | 15%-25% |
|---|---|
| aluminum titanic acid | 3%-11% |
| aluminum cobalt solid solution | 17%-24% |
| aluminum nickel solid solution | 3%-8% |
| silicon | 18%-25% |
| cobalt oxide | 4%-10% |
| ferrosilicon | 15%-24% |
| tantalum carbide | 0.2%-2% |
| manganese oxide | 0.05%-2% |
| silicade molybden | 0.3%-6.6% |
| spinel solid solution | 3%-7% |

Mix polycrystal compound powder mixture consisting of the ingredients above with lithium silicate solution, or with silicate line compound solution. Mix the things obtained in the way above with hydroxy compound as a suspension stabilizer, or with dispersive silicic acid. Then suspension is obtained. Apply the suspension to the surface of the metals such as steel plate, stainless steel plate, aluminum plate, copper plate, iron group, platinum group, foundry alloy, refractories, mortar, concrete, fiberboard, and a kind of felt. Then harden and combine them in room temperature or low temperature. In this case, concentration of silicic acid line lithium solution is: $SiO_2$ 15%-25%, $LiO_2$ 2%-3.5%. Concentration of silicate line compound is : $SiO_2$ 15%-30%, $K_2O$ 7%-15%. Powder of dispersive silicic acid or hydrox is in the range from 0.5% to 5% (wt).

The method to produce polycrystal compound ceramics molding. The compounding ratio and quantity of materials in this item are the same as the ratio of dispersive reinforcement materials and solid solution component such as alumina, cobalt, titanium etc. which are the principal components of powder mixture in the first item. Make a powder mixture whose average particle size is under $1\mu m$ from polycrystal compound fine particle by using dry classification or pneumatic classification. Mix the obtained powder mixture with a cellulose derivative, a stearic acid or a liquid including 2%-5% (wt) of polyvinyl alcohol ($CH_2$-CHOH) and obtain suspension. Calcine the suspension well stirred at 150°C to 200°C in a heat treatment furnace to remove the absorbed moisture and the organic compound. Compress the deaired powder into 1000kg cm²-10000kg/cm² in a prescribed mold. Shrinkage of the pressurized green moldings is 15%-25%. Sintering is possible in an air furnace, a pressure sintering furnace and vacuum furnace. Calcine the raw material at 400°C-600°C for 2 hours, next sinter it at 1300°C for 100 minutes. This time shrinkerage of the moldings is 6%-10%. As for oxidation cooling, self-cooling is needed in order to osmose oxygen into raw material as much as possible during cooling the sintered material down to below 1000°C. By doing this, sintered material which is close-set and tough can be obtained.

## BRIEF DESCRIPTION OF THE DRAWINGS

The above and other objects and advantages will become apparent from the following detailed

3

description when read in conjunction with the accompanying drawings wherein:

FIG. 1 is a diagram showing the fatigue limit of polycrystal compound ceramic;

FIG. 2 is a diagram showing the experiment on durability of compound ceramic with a burner ring;

FIG. 3 is a diagram showing the result of polycrystal compound ceramic particle distribution measurement;

FIG. 4 is a diagram showing the pore and strength of polycrystal compound ceramic;

FIG. 5 is a diagram showing the tensile strength of polycrystal compound ceramic;

FIG. 6A illustrates the techniques of molding manufacture of a polycrystal ceramic block;

FIG. 6B is a diagram showing the tensile strength of a sintered ceramic block;

FIG. 7 is a plan view of the polycrystal compound ceramic molding;

FIG. 8 is a diagram showing the thermal conductivity of the compound ceramic;

FIG. 9 is a diagram showing the thickness of coating and insulating effect of the compound ceramic; and

FIG. 10 is a diagram showing the density and thermal conductivity of the polycrystal compound ceramic;

## DESCRIPTION OF THE PREFERRED EMBODIMENTS

The object of this invention is to prevent the decline of hardness and strength of materials, say metal, by coating the material with polycrystal compound ceramics, or by making the material permeated with the ceramics, and to impart superior properties such as heat, wear and material organization brittleness resistance to the coating under the hard circumstances.

Method to produce polycrystal compound ceramics is as follows:

| | |
|---|---|
| aluminum oxide spinel | 15%-25% |
| aluminum titanic acid | 3%-11% |
| aluminum cobalt solid solution | 17%-24% |
| aluminum nickel solid solution | 3%-8% |
| silicon | 18%-25% |
| cobalt oxide | 4%-10% |
| ferrosilicon | 15%-24% |
| tantalum carbide | 0.2%-2% |
| manganese oxide | 0.05%-2% |
| silicade molybden | 0.3%-6.6% |
| spinel solid solution | 3%-7% |

Mix the fine particle mixture consisting of the ingredients above with lithium silicate solution, or with silicate line compound solution. Mix the things obtained in the way above with hydrox compound as a suspension stabilizer or with dispersive silicic acid to get suspension. Apply the suspension to such materials as heat-resistant heat engines, IC and packages, hot plates, sleeves, plungers, insulating plates, turbine blades, cylinder parts, engine parts, rocket chamber nozzels, tank lorries, lubrication parts of rockets, breakwater concrete, outer walls for buildings, steel frames, pipe lines, steel plates, stainless steel plates, titanium plates, alminum plates, alloys, refractories, bricks, optical fiber materials, fiber materials.

Aluminum oxide spinel has a purity of more than 98% and a particle size of 0.1$\mu$m to 40$\mu$m. It imparts heat resistance and anti-corrosion to the coating. It can hardly be eroded chemically and is inert. By being calcined, it forms a mix crystal spinel to strengthen bonds between crystal lattices and between heterogeneous phases. Bonds between crystals are qwuickened when the size of crystal is under 10$\mu$m. Also with MnO, it forms an eutectic mixture that is spinel type crystal, and imparts impact resistance to the coating.

Alminum titanic acid contains titanium oxide in amount of 40% to 60%. Purity of titanium oxide is more than 99% and that of aluminum oxide is more than 99.5%. Particle size of the two is from 0.1$\mu$m to 40$\mu$m. Aluminum titanic acid forms eutectic mixture by the synthesis of the two components to increase toughness, bending strength and anti-corrosion. It also prevents the coating from being wetted by melting metal. But when the amount of aluminum titanic acid is over 15% based on the total weight of powder mixture, it decreases average hardness inside the compound structure although it strengthens the hardness outwardly.

Aluminum cobalt solid solution is a homogeneous solid phase mixture containing 30% to 70% of cobalt. Its particle size is from 0.1$\mu$m to 40$\mu$m. Under a temperature of 400°C, a part of Al-Co which is made to be

4

solid solution in a mixed form precipitates on the part in contact with materials, forms reaction phase and then adheres. Under the condition of oxidation stage of 350°C to full fire stage of 1200°C, a part of fine particles of solid solution components fuses into nickel solid solution to promote diffusion and to increase the strength of the coating.

Aluminum nickel solid solution has a nickel content in amount of 40% to 70% and a particle size of 0.1μm to 40μm. It makes solid solution with other compound components, so it affects aluminum titanic acid and cobalt solid solution etc. to increase ductility and toughness to weaken thermal stress and impulsive force produced in a state of transition. That is to say it makes great effect on creep resistance in high temperature. It also imparts high degree of oxidation resistance, corrosive fatigue resistance and resistance against hydrogen gas, chlorine gas or hydrochloric acid, as shown in Tables 7, 8 and 9. This system of ceramic is effective to make the coating light because it has a strong chemical bond and small true specific gravity at the same time.

Ferrosilicon contains silicon in amount of 30% to 60% and its particle size is from 0.1μm to 40μm. Fe component precipitates in the lower layer as Fe-Al-Fe line metal iron in evaporation, oxidation stage in low temperature. This metal iron being affected by Al-Co-Ni line solid solution strongly bonds with each layer of metal plate. But it is necessary to treat metal surface when oilness adsorption layer on the surface is in the range of 5 to 10 A. The particle size of ferrosilicon is preferably under 10μm. That is because ferrosilicon varies much in volume so it easily becomes a state of supersaturation then separates iron oxide on the surface of the coating and frequently forms irregular nucleous.

Cobalt oxide has cobalt content of 5% to 10% and a particle size of 0.1μm to 40μm. It is an important element for the first stage of crystal bonding between compound components. It promotes diffusion reaction in case of solid-liquid phase system bonding, and makes irregular atoms crosslinked in oxidation stage at 450°C and above. That is Co line compound are gathered at crystal lattice point and bonds between crystals which have different atom order are strengthened. Cobalt oxide imparts high degree of nitric acid resistance, ductility and toughness to the coating. However, when the amount of cobalt oxide is over 15% based on the total weight of powder mixture, hardness of the coating is microscopically increased, but the bonding strength between particles is decreased and the average hardness within the layer thus decreased.

Silicon has a purity of more than 95% and a particle size of 0.1μm to 40μm. It provides the coating the most superior oxidation resistance especially in high temperature when the content of silicon is in the range of 15% to 30% based on the total weight of powder mixture. In low temperature, it affects $Al_2O_3$ line particle and forms superior barrier oxide film. But when the content of silicon is under 10%, corrosion, oxidation resistance is decreased. When the content is over 40%, bonding strength is declined because transformation of nontransition crystal is promoted.

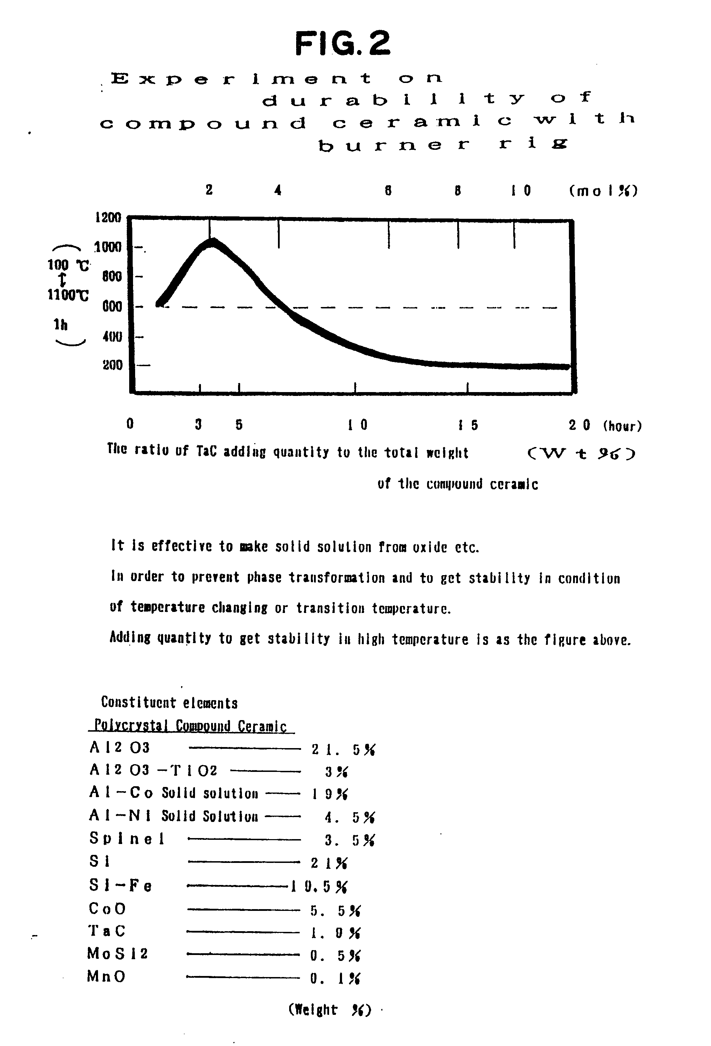

Tantalum carbide is the thing obtained by carbonizing tantalum with carbon black. The content is in the range of 0.3 to 2% based on the total weight of powder mixture. Tantalum and compound oxide or silicon act on each other and form barrier oxide film not to be affected by mineral acid hydrogen fluoride etc. So in condition of continuous conbustion at high temperature, it gives the coating high degree of stability frm thermochemical point of view, as shown in Fig. 2.

Also it superior ductivity makes it possible to raise 7% to 10% of its bending strength when the content is in the range of 0.3 to 2% based on the total weight of powder mixture. Tantalum carbide forms eutectic with cobalt line compound. This is important to maintain high degree of strength and hardness of the coating and to increase mechanical bending strength.

Manganese oxide compound as dispersive reinforcement materials is suitably present in amount of 0.2 to 3% based on the total weight of powder mixture. It plays an important part to heighten sintering ability of powder mixture. But when the content exceeds the proper amount, it precipitates in particle boundary as a glass layer. This lowers load softening temperature and then becomes unstable.

Silicade molybden has a purity of 98% and density of 95%. The content of molybden is preferably 62% and below, and silicon 38% and below. Silicade molybden has the high coefficient of linear expansion and provides the coating thermal shock resistance in high temperature, 1820°C is the highest. Its particle size is suitably submicron because the finer is the size of particle constituting a powder mixture, the quicker barrier oxide film is formed although the film is hard to be formed at a temperature of 500°C and below. Silicade molybden lacks plasticity, so the bond between different phases are weakened when the content is over 10% based on the total weight of powder mixture.

Spinel type solid solution is present in amount of 3 to 10% based on the total weight of powder mixture. It is obtained by calcining FeO and $Al_2O_3$ and then sintering them in oxidation furnace at 1500°C. The spinel begins solid phase reaction or phase boundary reaction in low temperture of 300°C. This promotes formation of mixed crystal oxide and maked the organization close. The spinel also prevents transition of crystal when the content is in the range of 3 to 10% based on the total weight of powder mixture.

It is desirable to classify polycrystal compound fine particle into three types according to a purpose of usage: coarse particle, fine particle and ultra-fine particle.

The way to crush coarse particles into particles which has a grain size of $10\mu m$ and below is as follows. Using a mill such as dry tumbling mill which uses crushing steel balls as grinding medium, vibrating mill and tube mill. Alumina balls of $25\emptyset$ to $55\emptyset$ are suitable. With such equipment, crush coarse particles for six hours at a time (20 to 30 r.p.m.) and knead. The quantity of coarse particles to be poured into the mill is half of its capacity and the balls are the same weight of the particles. Particles whose average size are $10\mu m$ to $40\mu m$ are obtained after six hours of crushing.

The reason why six hours of mixing and crushing operation at a time is better for coarse particles is because powder components that are to be crushed and mixed have different properties in such a point as particle size, hardness and density. They are seemingly in completely mixed state at a point of transition state that is a stage before relationship between crushing action and mixing action reaches kinetic equilibrium state. Therefore no change is found out with further more crushing and mixing operation.

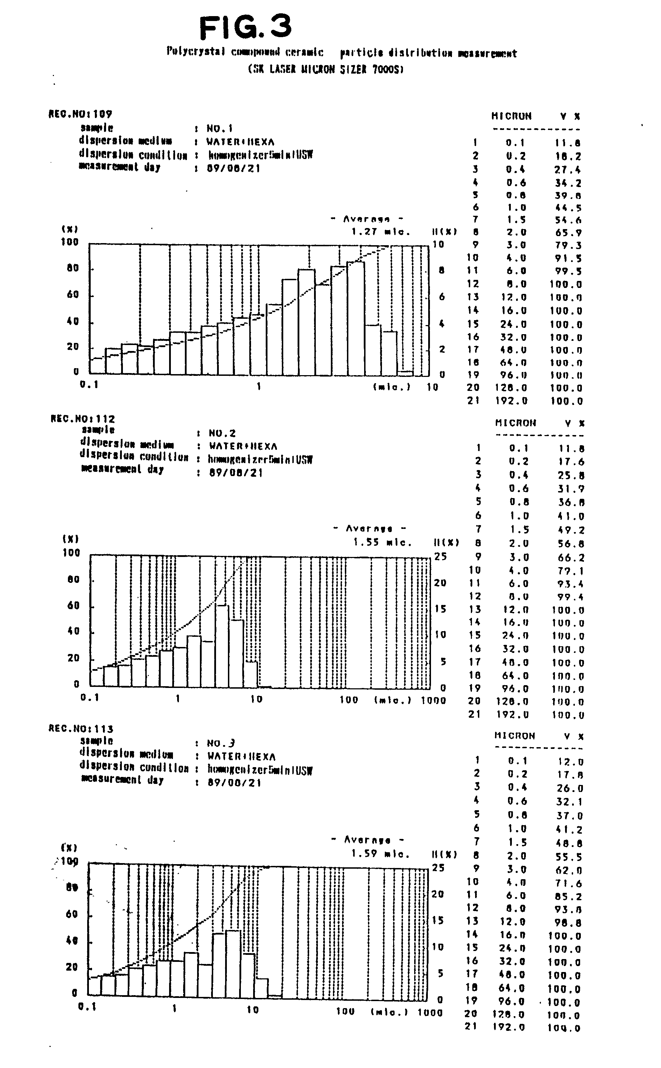

The way to crush fine particles into submicroscopic particles is as follows. Pass the particles through a screen filter after ball mill crushing to get fine particles of $10\mu m$ to $40\mu m$. Crush the filtered particles for 8 to 10 hours with pneumatic crusher. Then particles whose average size is $1\mu m$ to $10\mu m$ are obtained, as shown in Fig. 3.

The way to get ultra-fine particles is by crushing the fine particles for 8 to 10 hours with fluid energy mill to get uniform ultra-fine particles whose average size is about $0.3\mu m$ to $2\mu m$.

The method to produce the solution of the first item of this invention is as follows. Pour solvents, water and dispersive silicic acid etc. into a cyclindrical container. Turn screw with blade to mix those contents in a screw mixer. Then uniform solution can be obtained.

Lithium silicate solution ($LiO_2$-$SiO_2$) which is needed to produce polycrystal compound ceramic coating in the first item has a lithium content of 60 to 80%, and water 20 to 40%. When silicate line compound solution is used instead, it has a silicate content of 40 to 60% and water 40 to 60%. Dispersive silicate acid or hydroxy compound as suspension stabilizer is added to each solution. Mix ceramic powder in prescribed proportion into each solution obtained above to get suspension. Then coat or spray materials with the suspension.

Ceramic coating dries and hardens in the evaporating stage in room temperature. In low temperature range of $100°C$ to $300°C$, it strongly bonds with plate material and hardens to be airtight, because of the formation of reduction oxidation molecule and also the homogeneous component layer of Co line compound precipitated in interface. In the range of $400°C$ to $1000°C$, diffusion reaction is promoted and bonding phase of matrix fuses by chemical reaction, then ceramic sinters. In case of hardening in room temperature, coated ceramic begins to harden roughly after 30 minutes. But it is desirable to calcine at $100°C$ to $300°C$ for 30 minutes to 60 minutes. As for classification of bonding, the first stage of hardening and drying belongs to solid-liquid phase system, the second stage of intensive hardening in low temperature belongs to solid-solid phase system, and the final stage of reaction belongs to solid-liquid phase system. Bonding strength of polycrystal compound ceramic obtained in this process is $500kg/cm^2$.

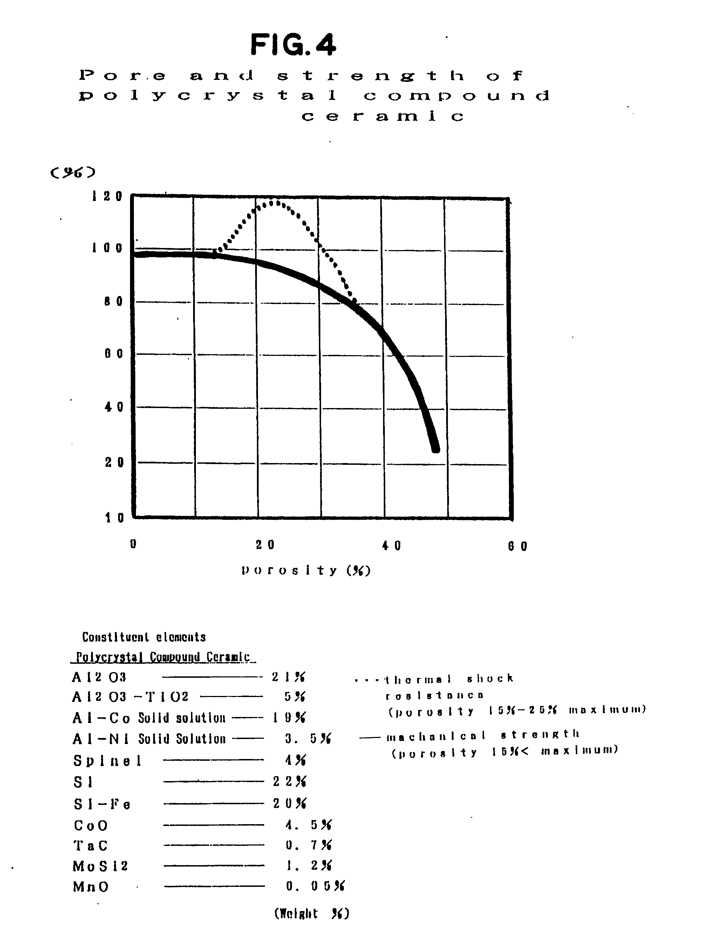

Properties of polycrystal compound ceramic in the first item of this invention is to strengthen the bonding between the components of pure solid solution and increase toughness of the coating. That is to say mechanical properties of polycrystal compound ceramic are characterized by its crystal structure, particle boundary structure and bonding power between stoms, as can be seen from Fig. 4.

Single crystal ceramic currently in use has a high melting point and great compression strength but cannot stand much tensile stress. That is to say its fatal defect is brittleness. In case of single crystal, stress energy produced by transition creep brings about right-angled cracks to the principal axis of crystal and then breaks crystals.

Polycrystal compound ceramic however, has high linear expansion coefficient to metal. This is because it structually has superior ductility and high linear expansion coefficient and it forms plural phases in which linear expansion coefficient vary degree by degree towards the surface of metal. Also polycrystal compound ceramic decreases stress energy and makes it hard to crack. This is because it is a heterogeneous structure which has irregular atomic order. Therefore, on occasion that stresses energy goes through polycrystal particle to reach the boundary of particle and again move into another crystal particle, a part of the energy is absorbed into particle boundary and another part of it changes its direction at particle boundary and then is absorbed. The reason is because polycrystal compound ceramic has different atomic order so it resists to moving stress energy.

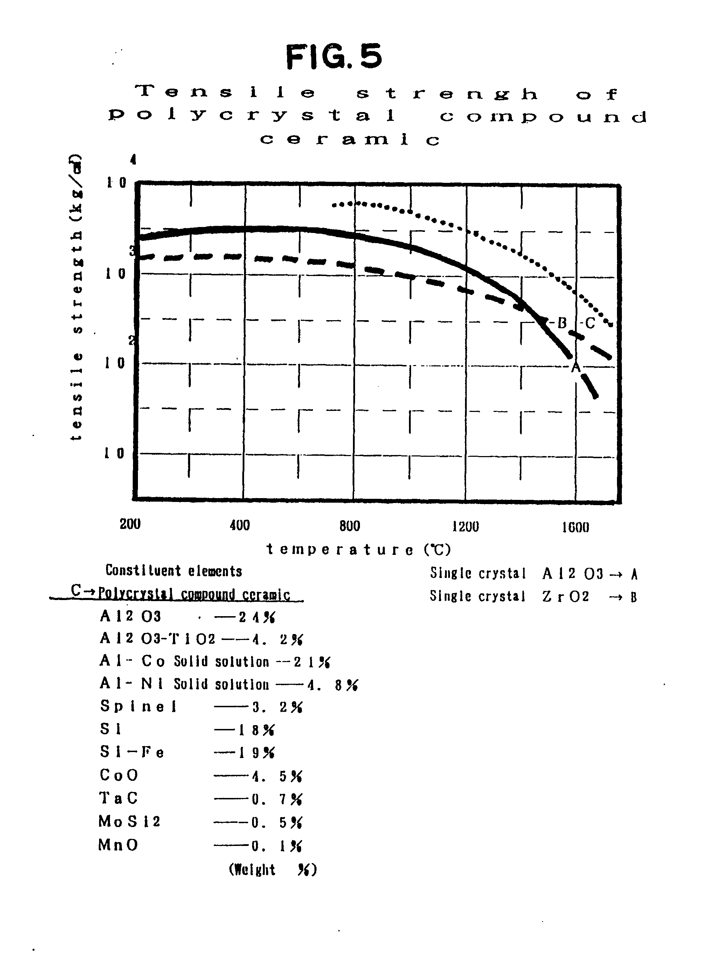

As it is described above, polycrystal compound ceramic of this invention has barristers so it makes it possible for different phases to bond strongly. That is to say it has a high degree of resistance to sudden temperature change, thermal shock and transition creep and has great tensile strength of which conventional single crystal ceramic lack. This is shown in Fig. 5. Consequently it imparts superior durability to the coating in ultra-high temperature and corrosive condition.

The point of the second item of this invention is to use the same powder components for molding as fine particles of polycrystal compound ceramic as described below.

| aluminum oxide spinel | 15%-25% |
|---|---|
| aluminum titanic acid | 3%-11% |
| aluminum cobalt solid solution | 17%-24% |
| aluminum nickel solid solution | 3%-8% |
| silicon | 18%-25% |
| cobalt oxide | 4%-10% |
| ferrosilicon | 15%-24% |
| tantalum carbide | 0.2%-2% |
| manganese oxide | 0.05%-2% |
| silicade molybden | 0.3%-6.6% |
| spinel solid solution | 3%-7% |

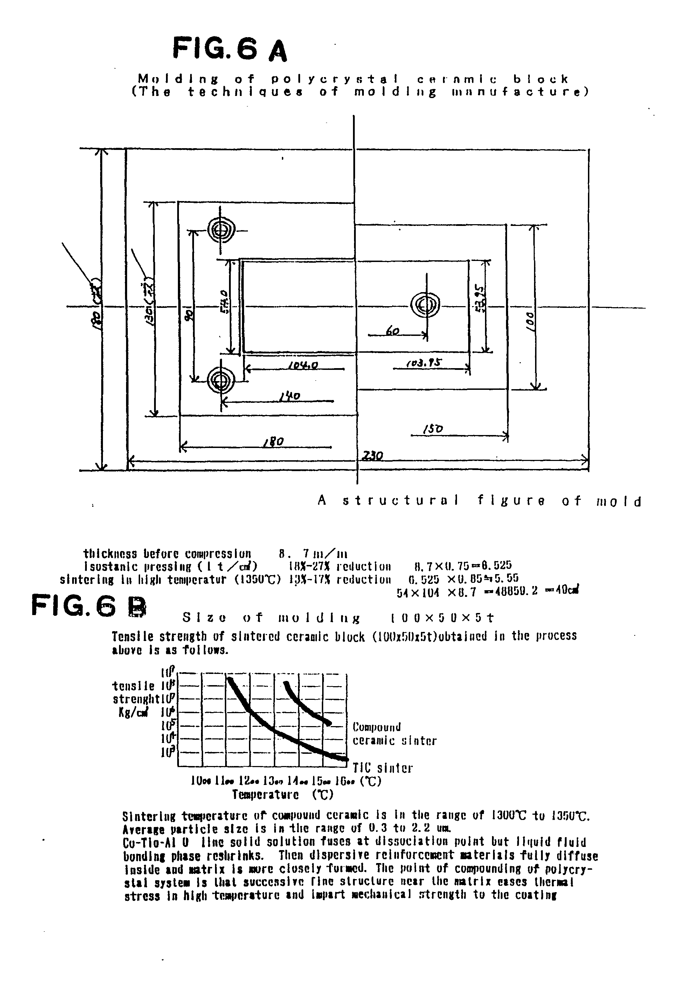

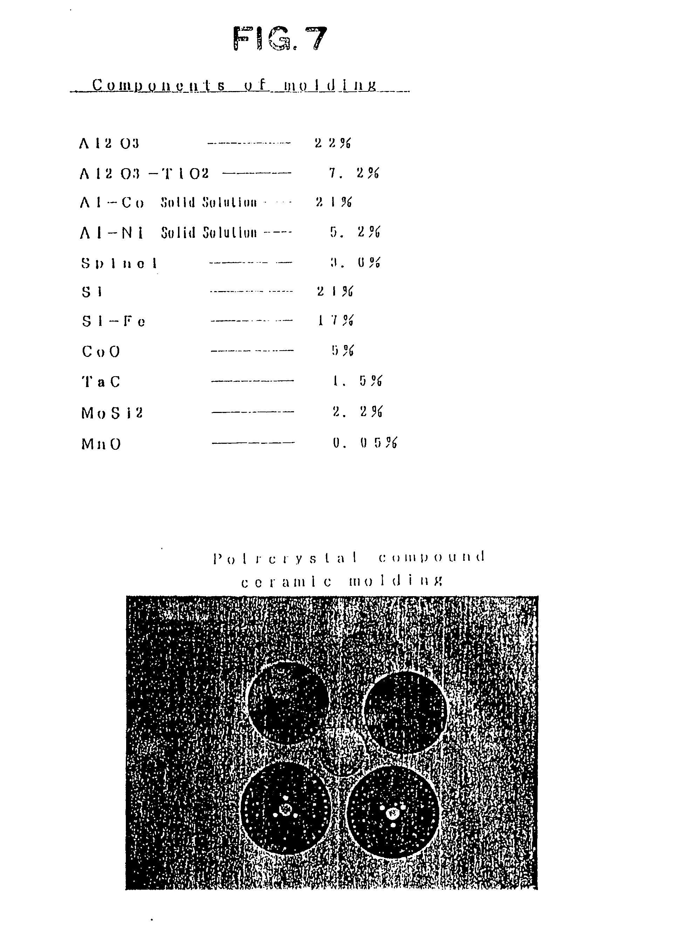

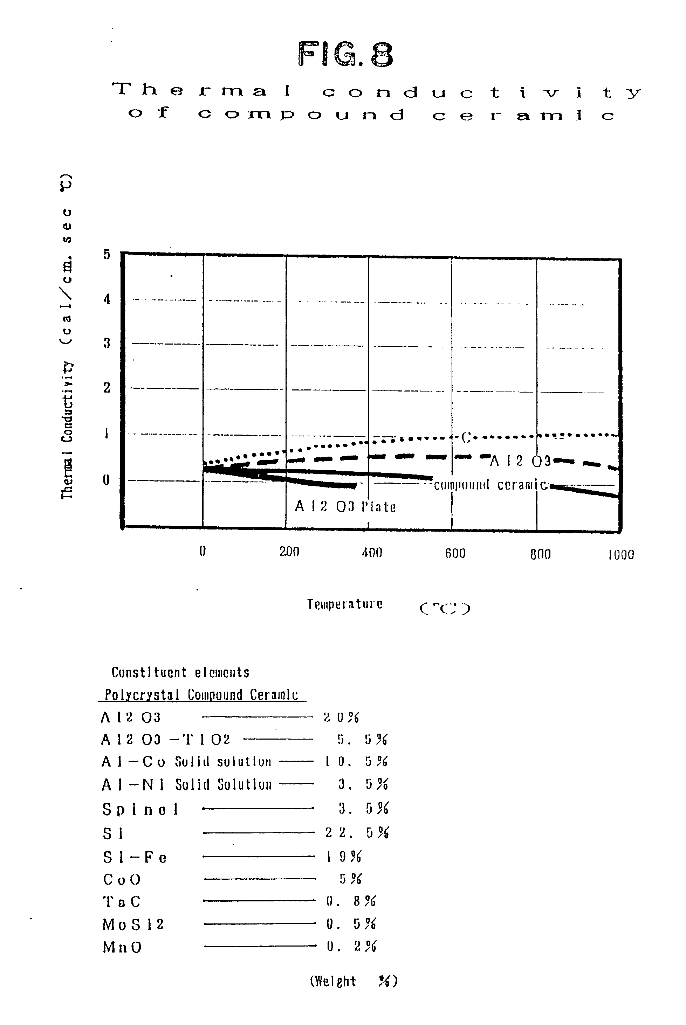

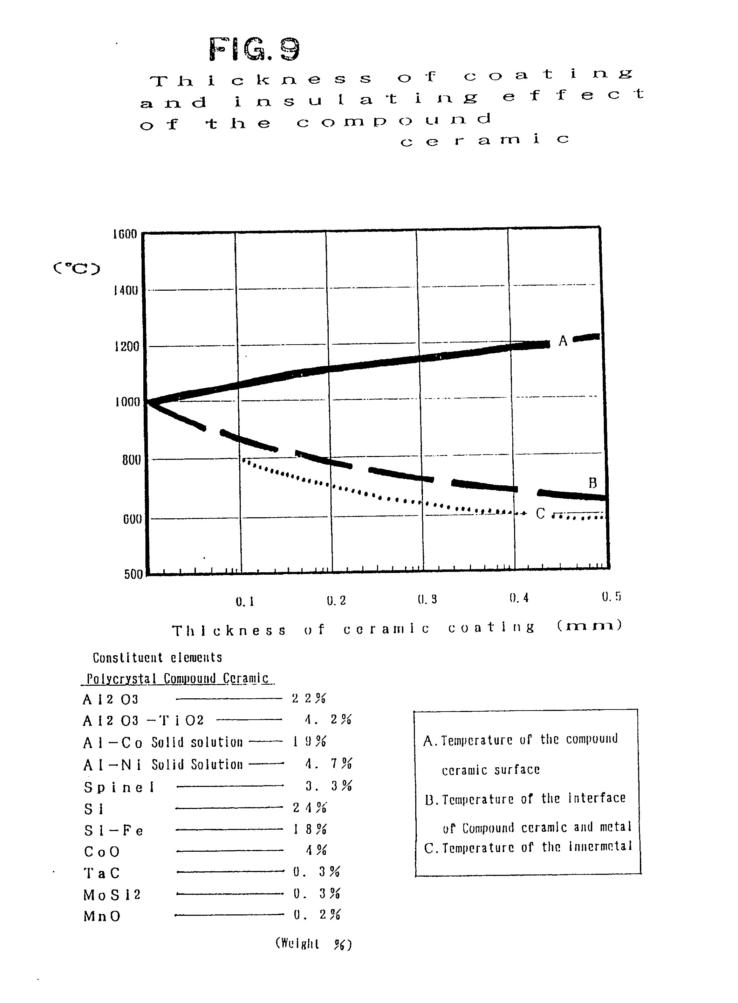

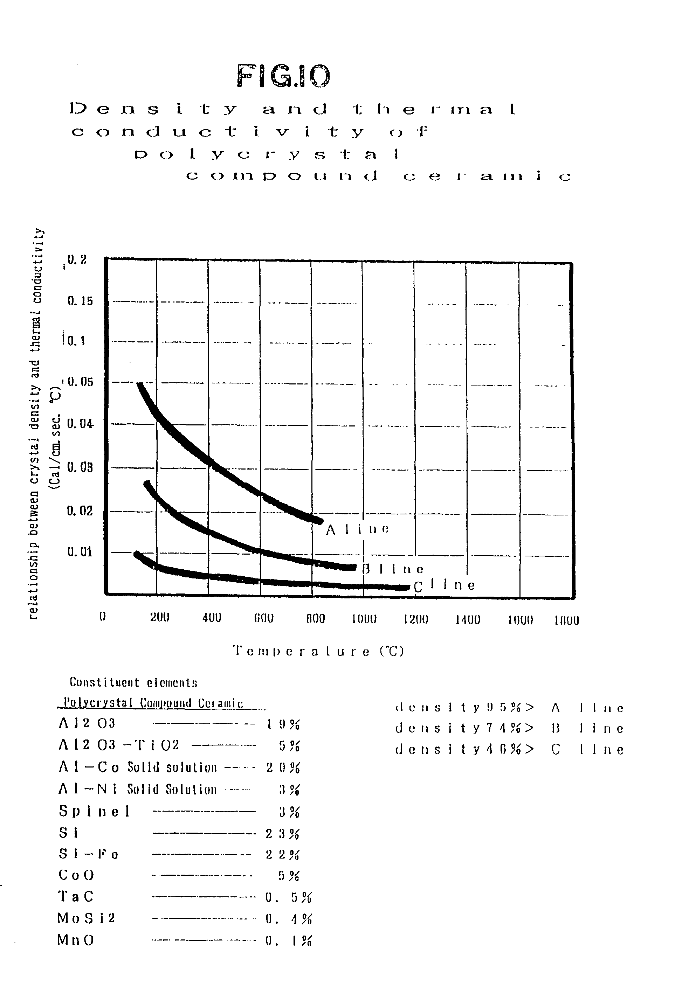

Classify the fine particles and crush them into ultra-fine particles of $0.3\mu m$ to $2\mu m$. Mix the ultra-fine particles with polyvinyl alcohol of 2 to 5% or cellulose derivative to get suspension. Get ultra-fine particles out of suspension, and calcine them at $150°C$ to $200°C$ in heat treatment furnace to volatilize alcohol. Compress deaired ultra-fine particles in methods such as isostatic prssing, dry-pressing and injection molding ways into $1000kg/cm^2$-$10000kmg/cm^2$. The green molding shrunk 15% to 25% from its original size is obtained. Calcine the molding at $400°C$ for two hours in air furnace, high frequency induction furnace, non-pressure furnace or vacuum furnace. At this time, shrinkage of molding is 6 to 10%. This kind of polycrystal compound ceramic molding sintered in the process above (Figs. 6A, 6B and 7) is light-weighted, close, resistant to continous thermal shock and imparts high degree of toughness to the coating. Because of this, it is suitable to manufacture aerospace equipments, automobile engine parts, electrical lubrication parts, foaming exterior, ceramic panels, ceramic boards and ceramic blocks and so on. Above all, this ceramic has a small bulk density (0.75/cc) as well as being light-weighted, resistant to thermal shock and corrosion. Therefor, it provides superior properties to honeycomb type panels, boards used for heat flux resistance and molding blocks, as can be seen from Figs. 8, 9 and 10.

TABLE 1

Test of corrosion by sulfric acid

| Standard | Test piece | Test item 1<br>polycrystal compound ceramic | Test item 2<br>alumina line single crystal ceramic |
|---|---|---|---|
| test of corrosion by sulfric acid. | metal plate (Ti)<br>(100mmx50mmx3mm)<br>(pretreatment)<br>Sand paper | Coat metal plate with polycrystal compound ceramic then calcine at 500°C. Sulfric acid of 10% based on the total weight of solution (prepared by sulfric with high degree of purity and pore water)<br><br>Liquid quantity — 500cc<br>Liquid is in stationary state in room temperature. | Coat metal plate with Al₂O₃ line single crystal ceramic then plasma flame spray. Sulfic acid of 10% based on the total weight of solution (prepared by sulfic with high degree of purity and pore water)<br><br>Liquid quantity — 500cc<br>Liquid is in stationary state in room temperature. |

components 1 polycrystal compound ceramic

$Al_2O_3$ ———— 21%

$Al_2O_3$-$TiO_3$ ———— 4.1%

$Al$-$Co$ solid solution —— 18%

$Al$-$Ni$ solid solution —— 6.3%

Spinel ———— 3.3%

Si ———— 22%

Si-Fe ———— 19%

CoO ———— 4.5%

TaO ———— 1.2%

$MoSi_2$ ———— 0.5%

MnO ———— 0.1% (weight%)

components 2 alumina line single crystal ceramic

$Al_2O_3$ ————

purity 99%>

density (3.8g/cm³)

coefficient of thermal expansion ($8X10^{-6}$ /°C)

| results of item 1; | Weight decrease by corrosion (mg/cm²/24hr) 0.2 | results of item 2; | Exfoliation of coating film entirely |
|---|---|---|---|

8

TABLE 2

Test of corrosion by sulfric acid

| Standard | Test piece | Test item 1 polycrystal compound ceramic | Test item 2 alumina line single crystal ceramic |
|---|---|---|---|
| test of corrosion by sulfric acid. | metal plate (SS) (100mmx50mmx2mm) (pretreatment) Sand paper | Coat metal plate with polycrystal compound ceramic then calcine at 500℃. Sulfric acid of 10% based on the total weight of solution (prepared by sulfric with high degree of porily and pore water) Liquid quantity — 500cc Liquid is in stationary state in room temperature. | Coat metal plate with Al₂O₃ line single crystal ceramic then plasma flame spray. Sulfic acid of 10% based on the total weight of solution (prepared by sulflic with high degree of porily and pore water) Liquid quantity — 500cc Liquid is in stationary state in room temperature |

components 1 polycrystal compound ceramic

$Al_2O_3$ ————— 21%

$Al_2O_3$-$TiO_3$ ————— 4.1%

$Al$-$Co$ solid solution —— 18%

$Al$-$Ni$ solid solution — 6.3%

Spinel ————— 3.3%

$Si$ ————— 22%

$Si$-$Fe$ ————— 19%

$CoO$ ————— 4.5%

$TaO$ ————— 1.2%

$MoSi_2$ ————— 0.5%

$MnO$ ————— 0.1%  (weight%)

components 2 alumina line single crystal ceramic

$Al_2O_3$ ————

purity 99%>

density (3.8g/cm³)

coefficient of thermal expansion ($8 \times 10^{-6}$/℃)

| results of item 1; | Weight decrease by corrosion (mg/cm²/24hr) 0.3 | results of item 2: | Exfoliation of coating film entirely |
|---|---|---|---|

TABLE 3

Test of corrosion by sulfric acid

| Standard | | Test item 1 | Test item 2 |
|---|---|---|---|
| | Test piece | polycrystal compound ceramic | alumina line single crystal ceramic |
| test of corrosion by sulfric acid. | Turbine blade (SuS) (70mmx20mmx3mm) (pretreatment) Sand paper | Coat turbin blade with polycrystal compound ceramic then calcine at 500°C. Sulfric acid of 60% based on the total weight of solution (prepared by sulfric with high degree of porily and pore water) Liquid quantity — 500cc Liquid is in stationary state in room temperature. | Coat turbin blade with Al₂O₃ line single crystal ceramic then plasma flame spray. Sulfic acid of 60% based on the total weight of solution (prepared by sulfic with high degree of porily and pore water) Liquid quantity — 500cc Liquid is in stationary state in room temperature. |

components 1 polycrystal compound ceramic

| Al2 O3 | ———— 21% |
|---|---|
| Al2 O3-Ti O3 | ——— 4.1% |
| Al—Co solid solution | — 16% |
| Al—Ni solid solution | — 6.3% |
| Spinel | ———— 3.3% |
| Si | ——— 22% |
| Si—Fe | ——— 19% |
| CoO | ——— 4.5% |
| TaO | ——— 1.2% |
| MoSi2 | ——— 0.5% |
| MnO | ——— 0.1%  (weight%) |

components 2 alumina line single crystal ceramic

Al2 O3  ——————
purity  99%>
density  (3.8g/cm³)
coefficient of thermal expansion (8X10$^{-6}$/°C)

| results of item 1; | Weight decrease by corrosion (mg/cm²/24hr)  0.27 | results of item 2; | Exfoliation of coating film entirely |
|---|---|---|---|

TABLE 4

Continuous combustion test

| Standard | | | |
|---|---|---|---|
| | Test piece | Test item | Test results |
| Gas temperature 1700°C±20°C. Velocity of gas fluid 30 — 50m/s Components of fused ashes So₃ 2 —4% V₂O₅ 0.03-0.06% others 0.01% | Block (Al₂O₃ — Cr line) | Coat block material used for wall surface of combustion furnace with polycrystal compound ceramic. Film thickness 0.3 -0.5mm heat pattern 200°C — 1H keeping 400°C — 2H keeping 600°C — 1H keeping 1000°C — 30M keeping 1700°C — 48H leave to cool | No peeling or exfoliation of ceramic film to be observed with magnifying glass of quatruple strength. Fused ashes' attack brings no change to be observed with naked eye. |

components 1

| | | |
|---|---|---|
| Al₂O₃ | ——————— | 20% |
| Al₂O₃-TiO₂ | ————— | 3% |
| Al—Co solid solution | —— | 20% |
| Al—Ni solid solution | —— | 5% |
| Spinel | ——————— | 3.5% |
| Si | ——————— | 19% |
| Si—Fe | ——————— | 23% |
| CoO | ——————— | 4% |
| TaO | ——————— | 1.5% |
| MoSi2 | ——————— | 0.5% |
| MnO | ——————— | 0.5% |
| | (weight%) | |

components 2

| | | |
|---|---|---|
| Al₂O₃ | ——————— | 17% |
| Al₂O₃-TiO₂ | ————— | 4% |
| Al—Co solid solution | —— | 24% |
| Al—Ni solid solution | —— | 3% |
| Spinel | ——————— | 4% |
| Si | ——————— | 22% |
| Si—Fe | ——————— | 19% |
| CoO | ——————— | 4% |
| TaO | ——————— | 1.7% |
| MoSi2 | ——————— | 1.2% |
| MnO | ——————— | 0.1% |
| | (weight%) | |

11

## TABLE 5

Test of soaking polycrystal compound ceramic coated plate in boiling Na liquid

| Standard | | | |
|---|---|---|---|
| | Test piece | Test item | Test results |
| SS41 plate<br><br>(50 x 200 x 7)<br>mm mm mm | Coat both A side and B side of SS41 plate with polycrystal compound ceramic.<br><br>film thickness 0.3mm calcining temperature 420°C | Condition of soaking test 200°C × 6H | No changes such as blistening.<br>Softening cracking exfoliation or ignition can be observed on either side of the film.<br>But part of it turns black in reaction to Na steam. |

components of A side ceramic

Al2 O3　　————　22%
Al2 O3-Ti O2　　————　4.2%
Al—Co solid solution　——　19%
Al—Ni solid solution　——　6.7%
Spinel　　————　3.1%
Si　　————　20%
Si—Fe　　————　18%
CoO　　————　4.3%
TaO　　————　2%
MoSi2　　————　0.6%
MnO　　————　0.1%
　　　　　(weight%)

components of B side ceramic

Al2 O3　　————　21%
Al2 O3-Ti O2　　————　5.2%
Al—Co solid solution　——　20%
Al—Ni solid solution　——　4.5%
Spinel　　————　3.5%
Si　　————　22%
Si—Fe　　————　16%
CoO　　————　4.8%
TaO　　————　1.5%
MoSi2　　————　1%
MnO　　————　0.5%
　　　　　(weight%)

TABLE 6

Test of corrosion by concentrated alkaline compound

| Standard | | | |
|---|---|---|---|
| | Test piece | Test item | Test results |
| (Components of Alkali) Na₂S₂O₃ Na₂S₂O₄ (Temperature) 1200°C ± 10°C × 2H | 50Cr — 50Ni (Nb small amount) Shape 28 φ × 200w Coat whole surface of cylindrical nozzle with polycrystal compound ceramic. | Heat resistance and corrosion resistance. | Strong adhesion between test piece nozzle and ceramic coating, and no exfoliation, cracks can be observed with the naked eye. No corrosive substance on the surface is observed with a scanning microscope. But the color changed partly. |

components 1

| | |
|---|---|
| Al2O3 | 20.5% |
| Al2O3-TiO2 | 6.2% |
| Al—Co solid solution | 19.5% |
| Al—Ni solid solution | 5.4% |
| Spinel | 3.8% |
| Si | 18% |
| Si—Fe | 17% |
| CoO | 4% |
| TaO | 0.3% |
| MoSi2 | 5.2% |
| MnO | 0.1% |

(weight%)

components 2

| | |
|---|---|
| Al2O3 | 19% |
| Al2O3-TiO2 | 3.5% |
| Al—Co solid solution | 19% |
| Al—Ni solid solution | 6.2% |
| Spinel | 4% |
| Si | 22% |
| Si—Fe | 22% |
| CoO | 5.5% |
| TaO | 1% |
| MoSi2 | 2.2% |
| MnO | 0.1% |

(weight%)

13

EP 0 432 326 A1

TABLE 7

Test of heat resistance of polycrystal compound ceramic coated on to turbine blade

| Standard | Test piece | Test item | Test results |
|---|---|---|---|
| Resistance to brittleness caused by hydrogen and heat resistance. | Plate surface of Inconel T/P, heat resistance alloy of Ni, with copper and then coat the surface with polycrystal compound ceramic of 50 to 100 μm in thickness. | 1000°C ± 20°C × 200H Leave the coated test piece to cool a after continuous combustion. | No exfoliation of ceramic coating from test piece or crack to be observed with the naked eye. Cracks between particle boundary of ceramic film organization corroded by hydrogen are observed with a scanning microscope, but no change. |

components 1

| A12 O3 | —————— 18% |
|---|---|
| A12 O3-TiO2 | —————— 4.6% |
| Al—Co solid solution | —— 21% |
| Al—Ni solid solution | ——— 6.5% |
| Spinel | —————— 4.4% |
| Si | —————— 20.5% |
| Si—Fe | —————— 16% |
| CoO | —————— 4.5% |
| TaO | —————— 1.2% |
| MoSi2 | —————— 3.2% |
| MnO | —————— 0.1% |

(weight%)

components 2

| A12 O3 | —————— 16% |
|---|---|
| A12 O3-TiO2 | —————— 5.2% |
| Al—Co solid solution | —— 23% |
| Al—Ni solid solution | ——— 3.5% |
| Spinel | —————— 3.2% |
| Si | —————— 23% |
| Si—Fe | —————— 19% |
| CoO | —————— 4.1% |
| TaO | —————— 0.8% |
| MoSi2 | —————— 2.2% |
| MnO | —————— 0.06% |

(weight%)

14

EP 0 432 326 A1

TABLE 8

Test of corrosion resistance

| Standard | | | |
|---|---|---|---|
| | Test piece | Test item | Test results |
| (Temperature) 350 ℃ — 400 ℃ (Components of gas) Co 16% Co2 8% H2 8% H2O · 4% H2S max1000ppm CoS max NH3 max1000ppm Methan 1% others N2 | Coat SS plate with polycrystal compound ceramic (60 μm film thickness) | Dry test piece coated with polycrystal compound ceramic in room temperature. Then heat the piece in continuous heat cycle of 350 ℃ to 400 ℃ for 8760 hours. Figure out weight decrease by corrosion. | components 1. Weight decrease 0.3mg/ cm² < components 2. weight decrease 0.32mg/ cm² < Test hours of both item 1 and 2 are 8760 hours. |

components 1

| Al2 O3 | ——————— 20% |
| Al2 O3-Ti O2 | ——————— 3.7% |
| Al — Co solid solution | —— 23% |
| Al — Ni solid solution | ——— 4.2% |
| Spinel | ——————— 4.5% |
| Si | ——————— 18% |
| Si — Fe | ——————— 21% |
| CoO | ——————— 4.5% |
| TaO | ——————— 0.4% |
| MoSi2 | ——————— 0.6% |
| MnO | ——————— 0.1% |

(weight%)

components 2

| Al2 O3 | ——————— 23% |
| Al2 O3-Ti O2 | ——————— 2.6% |
| Al — Co solid solution | ——— 20% |
| Al — Ni solid solution | ——— 3.8% |
| Spinel | ——————— 3.5% |
| Si | ——————— 19.5% |
| Si — Fe | ——————— 20% |
| CoO | ——————— 6.5% |
| TaO | ——————— 0.3% |
| MoSi2 | ——————— 0.3% |
| MnO | ——————— 0.5% |

(weight%)

15

TABLE 9

Test of corrosion by high density hydrogen gas in high temperature

| Standard | | | |
|---|---|---|---|
| | Test piece | Test item | Test results |
| Pressure 180kg/cm² Molar fraction H₂ 90% H₂O 10% | Coat whole surface of SuS316 casing with polycrystal compound ceramic of 100 to 200μm in thickness. Cool down in the following process room temperature-30M 200℃ — 30M 400℃ — 1H 700℃ — 30M | Corrosion by hydrogen in the follwing condition high temperature 800℃ high pressure 180kg/cm² Figure out average of weight decrease by corrosion after continuous heating 800℃± 5℃ × 48H | Lost weight after 48 hours of heating is 3.7mg/cm². Strong adhesion of test piece casing and polycrystal compound coating. No crack or blister to be observed on interface. |

components 1

| | | |
|---|---|---|
| A12O3 | ——————— | 18% |
| A12O3-TiO2 | ——————— | 4.2% |
| Al−Co solid solution | ——— | 20.5% |
| Al−Ni solid solution | ——— | 4.8% |
| Spinel | ——————— | 6.3% |
| Si | ——————— | 21% |
| Si−Fe | ——————— | 17% |
| CoO | ——————— | 4% |
| TaO | ——————— | 1.5% |
| MoSi2 | ——————— | 2.5% |
| MnO | ——————— | 0.2% |

(weight%)

components 2

| | | |
|---|---|---|
| A12O3 | ——————— | 20% |
| A12O3-TiO2 | ——————— | 3.2% |
| Al−Co solid solution | ——— | 18.5% |
| Al−Ni solid solution | ——— | 6.8% |
| Spinel | ——————— | 3.7% |
| Si | ——————— | 20% |
| Si−Fe | ——————— | 19% |
| CoO | ——————— | 4.5% |
| TaO | ——————— | 1.8% |
| MoSi2 | ——————— | 2.3% |
| MnO | ——————— | 0.5% |

(weight%)

## Claims

1. A method of producing compound ceramics coating, comprising the steps of:
mixing polycrystal compound powder mixture consisting of aluminum oxide spinel 15%-25%, aluminum titanic acid 3%-11%, aluminum cobalt solid solution 17%-24%, aluminum nickel solid solution 3%-8%, silicon 18%-25%, cobalt oxide 4%-10%, ferrosilicon 15%-254%, tantalum carbide 0.2%-2%, manganese oxide 0.05%-2%, silicade molybden 0.3%-6.6% and spinel solid solution 3%-7%, with lithium silicate solution or with silicate line compound solution;
mixing the things obtained in the way above with hydroxy compound as a suspension stabilizer or with dispersive silicic acid to obtain suspension;

applying said suspension to the surface of metals such as steel plate, stainless steel plate, aluminum plate, copper plate, iron group, platinum group, foundry alloy, refractories, mortar, concrete, fiberboard, and a kind of felt; and

hardening and combining them in room temperature and low temperature.

2. A method of producing a polycrystal compound ceramics molding, comprising the steps of:

making a powder mixture consisting of aluminum oxide spinel 15%-25%, aluminum titanic acid 3%-11%, aluminum cobalt solid solution 17%-24%, aluminum nickel solid solution 3%-8%, silicon 18%-25%, cobalt oxide 4%-10%, ferrosilicon 15%-24%, tantalum carbide 0.2%-2%, manganese oxide 0.05%-2%, silicade molybden 0.3%-6.6% and spinel solid solution 3%-7%;

mixing said power mixture with a cellulose derivative, a stearic acid or a liquid including 2%-5% (wt) of polyvinyl alcohol ($CH_2$-CHOH) to obain suspension; and

calcining, compressing and sintering said suspension.

# FIG. 1

## Fatigue limit of polycrystal compound ceramic

Constituent / elements / A ; Polycrystal compound ceramic

| | | |
|---|---|---|
| Al2 O3 —— 21% | S i —— 21% | MnO — 0.05% |
| Al2 O3 - Ti O2—3.3% | S i - F e ——18% | |
| Al - Co solid solution — 20.5% | C o O — 4.4% | |
| Al - Ni solid solution ——5.5% | T a C — 1.3% | |
| S p i n e l —— 3.4% | M o S i 2—1.6% | (Weight %) |

Constituent / elements / B ; Polycrystal compound ceramic

| | | |
|---|---|---|
| Al2 O3 —— 27% | S i —— 13% | MnO — 0.1% |
| Al2 O3 - Ti O2 — 12% | S i - F e —— 15% | |
| Al - Co solid solution — 15% | C o O — 12% | |
| Al - Ni solid solution — 2.5% | T a C — 0.2% | |
| S p i n e l —— 4% | M o S i 2 ——————— | (Weight %) |

Constituent / elements / C ; Cermet (WC-Co line) Plasma flame spray

18

# FIG.2

## Experiment on durability of compound ceramic with burner rig

The ratio of TaC adding quantity to the total weight (Wt%)

of the compound ceramic

It is effective to make solid solution from oxide etc.

In order to prevent phase transformation and to get stability in condition

of temperature changing or transition temperature.

Adding quantity to get stability in high temperature is as the figure above.

Constituent elements

Polycrystal Compound Ceramic

| | |
|---|---|
| Al2 O3 | 21. 5% |
| Al2 O3 −Ti O2 | 3% |
| Al−Co Solid solution | 19% |
| Al−Ni Solid Solution | 4. 5% |
| Spinel | 3. 5% |
| Si | 21% |
| Si−Fe | 10.5% |
| CoO | 5. 5% |
| TaC | 1. 0% |
| MoSi2 | 0. 5% |
| MnO | 0. 1% |

(Weight %)

# FIG.3

Polycrystal compound ceramic  particle distribution measurement
(SK LASER MICRON SIZER 7000S)

## REC.NO:109

| | | |
|---|---|---|
| sample | : | NO.1 |
| dispersion medium | : | WATER+HEXA |
| dispersion condition | : | homogenizer5min!USW |
| measurement day | : | 89/08/21 |

– Average –
1.27 mic.

| | MICRON | Y X |
|---|---|---|
| 1 | 0.1 | 11.8 |
| 2 | 0.2 | 18.2 |
| 3 | 0.4 | 27.4 |
| 4 | 0.6 | 34.2 |
| 5 | 0.8 | 39.8 |
| 6 | 1.0 | 44.5 |
| 7 | 1.5 | 54.6 |
| 8 | 2.0 | 65.9 |
| 9 | 3.0 | 79.3 |
| 10 | 4.0 | 91.5 |
| 11 | 6.0 | 99.5 |
| 12 | 8.0 | 100.0 |
| 13 | 12.0 | 100.0 |
| 14 | 16.0 | 100.0 |
| 15 | 24.0 | 100.0 |
| 16 | 32.0 | 100.0 |
| 17 | 48.0 | 100.0 |
| 18 | 64.0 | 100.0 |
| 19 | 96.0 | 100.0 |
| 20 | 128.0 | 100.0 |
| 21 | 192.0 | 100.0 |

## REC.NO:112

| | | |
|---|---|---|
| sample | : | NO.2 |
| dispersion medium | : | WATER+HEXA |
| dispersion condition | : | homogenizer5min!USW |
| measurement day | : | 89/08/21 |

– Average –
1.55 mic.

| | MICRON | Y X |
|---|---|---|
| 1 | 0.1 | 11.8 |
| 2 | 0.2 | 17.6 |
| 3 | 0.4 | 25.8 |
| 4 | 0.6 | 31.9 |
| 5 | 0.8 | 36.8 |
| 6 | 1.0 | 41.0 |
| 7 | 1.5 | 49.2 |
| 8 | 2.0 | 56.8 |
| 9 | 3.0 | 66.2 |
| 10 | 4.0 | 77.1 |
| 11 | 6.0 | 93.4 |
| 12 | 8.0 | 99.4 |
| 13 | 12.0 | 100.0 |
| 14 | 16.0 | 100.0 |
| 15 | 24.0 | 100.0 |
| 16 | 32.0 | 100.0 |
| 17 | 48.0 | 100.0 |
| 18 | 64.0 | 100.0 |
| 19 | 96.0 | 100.0 |
| 20 | 128.0 | 100.0 |
| 21 | 192.0 | 100.0 |

## REC.NO:113

| | | |
|---|---|---|
| sample | : | NO.3 |
| dispersion medium | : | WATER+HEXA |
| dispersion condition | : | homogenizer5min!USW |
| measurement day | : | 89/08/21 |

– Average –
1.59 mic.

| | MICRON | Y X |
|---|---|---|
| 1 | 0.1 | 12.0 |
| 2 | 0.2 | 17.8 |
| 3 | 0.4 | 26.0 |
| 4 | 0.6 | 32.1 |
| 5 | 0.8 | 37.0 |
| 6 | 1.0 | 41.2 |
| 7 | 1.5 | 48.8 |
| 8 | 2.0 | 55.5 |
| 9 | 3.0 | 62.0 |
| 10 | 4.0 | 71.6 |
| 11 | 6.0 | 85.2 |
| 12 | 8.0 | 93.8 |
| 13 | 12.0 | 98.8 |
| 14 | 16.0 | 100.0 |
| 15 | 24.0 | 100.0 |
| 16 | 32.0 | 100.0 |
| 17 | 48.0 | 100.0 |
| 18 | 64.0 | 100.0 |
| 19 | 96.0 | 100.0 |
| 20 | 128.0 | 100.0 |
| 21 | 192.0 | 100.0 |

# FIG. 4

Pore and strength of polycrystal compound ceramic

(%)

porosity (%)

Constituent elements

Polycrystal Compound Ceramic

| | | |
|---|---|---|
| Al₂O₃ | —————————— | 21% |
| Al₂O₃ − TiO₂ | ——————— | 5% |
| Al − Co Solid solution | —————— | 19% |
| Al − Ni Solid Solution | —————— | 3.5% |
| Spinel | —————————— | 4% |
| Si | —————————— | 22% |
| Si − Fe | —————————— | 20% |
| CoO | —————————— | 4.5% |
| TaC | —————————— | 0.7% |
| MoSi₂ | —————————— | 1.2% |
| MnO | —————————— | 0.05% |

... thermal shock resistance
(porosity 15%−25% maximum)

—— mechanical strength
(porosity 15%< maximum)

(Weight %)

# FIG. 5

## Tensile strengh of polycrystal compound ceramic

tensile strength (kg/㎠)

10⁴

10³

10²

10¹

10⁰

B  C

A

200    400    800    1200    1600

temperature (℃)

Constituent elements

C → Polycrystal compound ceramic

A l2 O3 · —— 2 4 %

A l2 O3-T i O2 —— 4. 2 %

A l- C o Solid solution —— 2 1 %

A l- N i Solid solution —— 4. 8 %

S p i n e l —— 3. 2 %

S i —— 1 8 %

S i — F e —— 1 9 %

C o O —— 4. 5 %

T a C —— 0. 7 %

M o S i2 —— 0. 5 %

M n O —— 0. 1 %

(Weight %)

Single crystal A l2 O3 → A

Single crystal Z r O2 → B

# FIG. 6 A

Molding of polycrystal ceramic block
(The techniques of molding manufacture)

A structural figure of mold

thickness before compression        8. 7 m/m
Isostanic pressing ( 1 t /cm²)       18%-27% reduction        8. 7×0. 75＝6. 525
sintering in high temperatur (1350℃) 13%-17% reduction      6. 525 ×0. 85≒5. 55
                                                               54×104 ×8. 7 ＝48859. 2 ＝40cm²

# FIG. 6 B

Size of molding        100×50×5t

Tensile strength of sintered ceramic block (100x50x5t)obtained in the process
above is as follows.

Sintering temperature of compound ceramic is in the range of 1300℃ to 1350℃.
Average particle size is in the range of 0.3 to 2.2 um.
Cu-Tio-Al O  line solid solution fuses at dissociation point but liquid fluid
bonding phase reshrinks.  Then dispersive reinforcement materials fully diffuse
inside and matrix is more closely formed. The point of compounding of polycry-
stal system is that successive fine structure near the matrix eases thermal
stress in high temperature and impart mechanical strength to the coating

# FIG. 7

## Components of molding

| | | |
|---|---|---|
| Al2 O3 | ——————— | 2 2 % |
| Al2 O3 – Ti O2 | ——————— | 7. 2 % |
| Al – Co Solid Solution | ———— | 2 1 % |
| Al – Ni Solid Solution | ———— | 5. 2 % |
| Spinel | ——————— | 3. 0 % |
| Si | ——————— | 2 1 % |
| Si – Fe | ——————— | 1 7 % |
| Co O | ——————— | 5 % |
| Ta C | ——————— | 1. 5 % |
| Mo Si 2 | ——————— | 2. 2 % |
| Mn O | ——————— | 0. 0 5 % |

Polrcrystal compound
ceramic molding

24

EP 0 432 326 A1

# FIG.8

## Thermal conductivity of compound ceramic

Constituent elements
Polycrystal Compound Ceramic

| | |
|---|---|
| Al2 O3 | 2 0 % |
| Al2 O3 −Ti O2 | 5. 5 % |
| Al −Co Solid solution | 1 9. 5 % |
| Al −Ni Solid Solution | 3. 5 % |
| Spinel | 3. 5 % |
| Si | 2 2. 5 % |
| Si −Fe | 1 9 % |
| CoO | 5 % |
| TaC | 0. 8 % |
| MoSi2 | 0. 5 % |
| MnO | 0. 2 % |

(Weight %)

# FIG.9

## Thickness of coating and insulating effect of the compound ceramic

(°C)

Thickness of ceramic coating (mm)

Constituent elements

Polycrystal Compound Ceramic

| | | |
|---|---|---|
| Al2 O3 | ——— | 2 2 % |
| Al2 O3 — Ti O2 | ——— | 4. 2 % |
| Al — Co Solid solution | —— | 1 9 % |
| Al — Ni Solid Solution | —— | 4. 7 % |
| Spinel | ——— | 3. 3 % |
| Si | ——— | 2 4 % |
| Si — Fe | ——— | 1 8 % |
| Co O | ——— | 4 % |
| Ta C | ——— | 0. 3 % |
| Mo Si2 | ——— | 0. 3 % |
| Mn O | ——— | 0. 2 % |

(Weight %)

A. Temperature of the compound ceramic surface

B. Temperature of the interface of Compound ceramic and metal

C. Temperature of the innermetal

# FIG.IO

## Density and thermal conductivity of polycrystal compound ceramic

relationship between crystal density and thermal conductivity (Cal/cm sec. °C)

Temperature (°C)

Constituent elements

Polycrystal Compound Ceramic

| | | |
|---|---|---|
| Al2 O3 | ————————— | 1 9 % |
| Al2 O3 – T i O2 | ————— | 5 % |
| Al – Co Solid solution | ———— | 2 0 % |
| Al – N i Solid Solution | ——— | 3 % |
| Spinel | ———————— | 3 % |
| S i | ——————— | 2 3 % |
| S i – Fe | ——————— | 2 2 % |
| CoO | ——————— | 5 % |
| TaC | ——————— | 0. 5 % |
| MoS i 2 | ——————— | 0. 4 % |
| MnO | ——————— | 0. 1 % |

density 9 5 % > A line
density 7 4 % > B line
density 4 6 % > C line

27

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-2 238 592 (TERRACOM ESTABLISHMENT) * Page 5, line 24 - page 6, line 23; page 7, line 1 - page 8, line 9; page 9, lines 6-28; page 10, lines 16-30; claims 1-6,8,10-12 * | 1 | C 04 B 41/50 C 04 B 35/44 C 23 C 24/00 |
| A | EP-A-0 296 981 (VESUVIUS CRUCIBLE CO.) * Page 1, line 25 - page 2, line 39; page 4, lines 22-61; claims 1,3,17 * | 1 | |
| A | DE-A-2 747 663 (GRUNZWEIG & HARTMANN UND GLASFASER AG) * Claims 1-4,6; page 4, line 10 - page 6, line 18 * | 1 | |
| A | NL-A-6 607 067 (OWENS-CORNING FIBERGLAS CO.) * Page 1, line 6 - page 2, line 4; page 5, line 20 - page 6, line 12; page 7, line 2 - page 9, line 27; page 10, lines 24-30; page 14, lines 4-30; claim 1 * | 1 | TECHNICAL FIELDS SEARCHED (Int. Cl.5) C 04 B 41 C 23 C 24 |
| A | CHEMICAL ABSTRACTS, vol. 102, no. 10, March 1985, page 286, abstract no. 83375z, Columbus, Ohio, US; & JP-A-59 199 588 (USUI INTERN. IND. CO., LTD) 12-11-1984 * Abstract * | 1 | |
| A | CHEMICAL ABSTRACTS, vol. 102, no. 4, January 1985, page 390, abstract no. 30841s, Columbus, Ohio, US; & JP-A-59 174 587 (KIKUSUI KAGAKU KOGYO CO., LTD) 03-10-1984 * Abstract * | 1 | |

~~The present search report has been drawn up for all claims~~

| Place of search | Date of completion of the search | Examiner |
|---|---|---|
| THE HAGUE | 09-08-1990 | NORGREN-OLSSON |

European Patent

Office

---

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid.

namely claims:

☐ No claims fees have been paid within the prescribed time limit. The present European search report has been drawn up for the first ten claims.

---

## X | LACK OF UNITY OF INVENTION

The Search Division considers that the present European patent application does not comply with the requirement of unity of invention and relates to several inventions or groups of inventions,

namely:

1. Claim 1: Method for producing a ceramic coating.

2. Claim 2: Method for producing a ceramic body.

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☒ None of the further search fees has been paid within the fixed time limit. The present European search report has been drawn up for those parts of the European patent application which relate to the invention first mentioned in the claims,

namely claims: